# EUROPÄISCHE PATENTSCHRIFT

(11) **EP 1 476 319 B1**
(45) Veröffentlichungstag und Bekanntmachung des Hinweises auf die Patenterteilung: **15.10.2008**
(21) Anmeldenummer: 03702637.4
(22) Anmeldetag: 14.02.2003
(51) Int. Cl.: B60B 21/12, B60B 21/02, B60B 19/00

(54) **FAHRZEUGRAD MIT SIGNALGEBERFUNKTION**
VEHICLE WHEEL COMPRISING A SIGNAL GENERATOR FUNCTION
ROUE DE VEHICULE DOTEE D'UNE FONCTION GENERATION DE SIGNAUX

(30) Priorität: 22.02.2002 DE 10207374
(43) Veröffentlichungstag der Anmeldung: 17.11.2004
(73) Patentinhaber: ThyssenKrupp Steel AG, 47166 Duisburg (DE)
(72) Erfinder: BLÜMEL, Klaus, 46537 Dinslaken (DE)
(74) Vertreter: Cohausz & Florack
(86) Internationale Anmeldenummer: PCT/EP2003/001470
(87) Internationale Veröffentlichungsnummer: WO 2003/070489

(56) Entgegenhaltungen:
- DE-A- 19 620 581
- DE-A- 19 953 030
- DE-A- 19 957 645
- US-A- 5 913 240
- PATENT ABSTRACTS OF JAPAN vol. 1996, no. 02, 29. Februar 1996 (1996-02-29) & JP 07 280821 A (ASAHI KEIKI SEISAKUSHO:KK), 27. Oktober 1995 (1995-10-27)

## Beschreibung

Zur Standardausrüstung moderner mit Rädern bestückter Fahrzeuge, insbesondere zur Personenbeförderung, gehören Überwachungssysteme für die Drehgeschwindigkeit der Räder. Von diesen Systemen ist das ABS-System (Antiblockiersystem) das bekannteste. Die Funktionstüchtigkeit dieses und der anderen Systeme hängt von der Genauigkeit der Erfassung der Drehgeschwindigkeit des Rades innerhalb jeder Umdrehung ab. Um die Drehgeschwindigkeit möglichst feinfühlig zu erfassen, ist aus der Praxis ein Meßgerät zur Erfassung der Drehgeschwindigkeit bekannt, das eine mit dem jeweiligen Rad mitlaufende, z.B. gezahnte Scheibe, und einen feststehenden, z.B. am Bremssattel einer Scheibenbremse gehaltenen Sensor aufweist, der die Zähne und die Lücken der gezahnten Scheibe berührungslos erfaßt. Die bei einer bestimmten Drehgeschwindigkeit vom Sensor erfaßte Anzahl von Zähnen und Zahnlücken hängt vom Durchmesser der Scheibe und der am Umfang der Scheibe untergebrachten Zähne und Zahnlücken ab. Aus Gründen der Korrosion und des Verschmutzens kann die Verzahnung nicht besonders filigran ausgeführt sein. Der schon durch die Unterbringung der Bremsscheibe mit dem Bremssattel eingeschränkte Bauraum in der Radschüssel erlaubt auch keinen großen Durchmesser der gezahnten Scheibe. Aus diesen Gründen läßt sich mit der bekannten Technik nicht die gewünschte Feinfühligkeit bei der Erfassung der Drehgeschwindigkeit eines Fahrzeugrades erzielen.

Darüber hinaus sind aus der Patentliteratur (DE 196 20 581 A1; DE 198 53 696 A1) berührungslos arbeitende Erfassungssysteme für die Drehgeschwindigkeit eines Fahrzeugrades bekannt, die aus einer Spur von an einer Seitenflanke des Reifens des Fahrzeugrades oder an dessen Felge angeordneten Marken in Form von magnetischen Elementen bestehen, die bei Drehung des Fahrzeugrades an einem stationären Sensor eines Meßgerätes vorbeibewegt werden. Dabei dienen die magnetischen Elemente ausschließlich der Erfassung der Drehgeschwindigkeit des Fahrzeugrades. Die JP 7-280821 A bildet den nächstliegenden

Stand der Technik gemäß Oberbegriff des Anspruchs 1.

Der Erfindung liegt die Aufgabe zugrunde, ein feinfühlig reagierendes Erfassungssystem für die Drehgeschwindigkeit eines Fahrzeugrades unter Einbeziehung seiner Felge konstruktiv zu vereinfachen und robuster zu gestalten.

Diese Aufgabe wird mit einer ein Felgenbett aufweisenden Felge für ein Fahrzeugrad, bei dem auf dem Felgenbett oder in ihm integriert eine in Umfangsrichtung des Felgenbettes verlaufende Markierung vorgesehen ist, die beim Passieren eines räumlich neben dem Fahrzeugrad und gegenüber dessen Drehbewegung stationär anzuordnenden Sensors eines Meßgerätes zur berührungslosen Erfassung der Drehgeschwindigkeit dient, dadurch gelöst, daß die Markierung aus einer Spur von Marken besteht, die als eine das Felgenbett versteifende Profilierung ausgebildet ist.

Bei einer solchen Felge eines Fahrzeugrades, die ein- oder mehrteilig sein und aus verschiedenen Werkstoffen, vorzugsweise aber aus Stahl bestehen kann, werden für die Erfassung der Drehgeschwindigkeit des Rades keine zusätzlichen Bauraum beanspruchenden Elemente benötigt, weil das Felgenbett selbst mit den Marken versehen ist. Das bedeutet auch, daß sie auf einem größtmöglichen Umfang mit dem Effekt angeordnet sind, daß hier eine große Anzahl von Marken untergebracht werden kann, ohne daß sie besonders filigran ausgebildet sein müssen. Wegen dieser vergleichsweise groben Ausbildung der Marken besteht auch keine Gefahr, daß sie aufgrund von Verschmutzung oder anderen äußeren Einflüssen ihre Erfaßbarkeit verlieren. Im Vergleich zu den Zähnen bei der bekannten, frei liegenden, gezahnten Scheibe liegen sie vor Schmutz und Beschädigungen auch bei der Demontage und in demontiertem Zustand des Rades gut geschützt in dessen Radschüssel. Außerdem wirken sie versteifend, was bei gleicher Steifigkeit kleinere Wandstärken und damit ein geringeres Gewicht ermöglicht. Bei der ungefederten Masse eines Fahrzeugrades wirkt sich das positiv hinsichtlich des Fahrkomforts aus.

Wie bei einem der bekannten Meßgeräte zur Erfassung der Drehgeschwindigkeit eines Fahrzeugrades kann auch beim Erfindungsgegenstand der Sensor vom Bremssattel einer Bremsanlage getragen sein.

Nach einer Ausgestaltung der Erfindung können die in der Spur hintereinander angeordneten Marken eine laufrichtungsabhängige Signalfolge im Sensor erzeugen. Dafür können sie in gleichartige Gruppen aufgeteilt sein.

Als Marken eignen sich optisch, elektrisch oder magnetisch erfaßbare Elemente. Optisch erfaßbare Elemente können Rippen, Nuten oder Sicken sein. Als Werkstoff für magnetisch erfaßbare Elemente eignen sich amorphe, weichmagnetische Legierungen, wie metallische Gläser. Diese Elemente sind dann an der Profilierung angebracht.

Gegenstand der Erfindung ist ferner ein Halbzeug in Form eines Blechstreifens aus Stahl zur Herstellung einer ein Felgenbett aufweisenden Felge für ein Fahrzeugrad mit einem oder einer Auswahl der beschriebenen Merkmale. Bei einem solchen Halbzeug erstreckt sich die Spur der Marken in Längsrichtung des Streifens.

Im folgenden wird die Erfindung anhand einer ein Ausführungsbeispiel darstellenden Zeichnung näher erläutert. Im einzelnen zeigen:
- Fig. 1: eine Felge eines Fahrzeugrades im Halbschnitt,

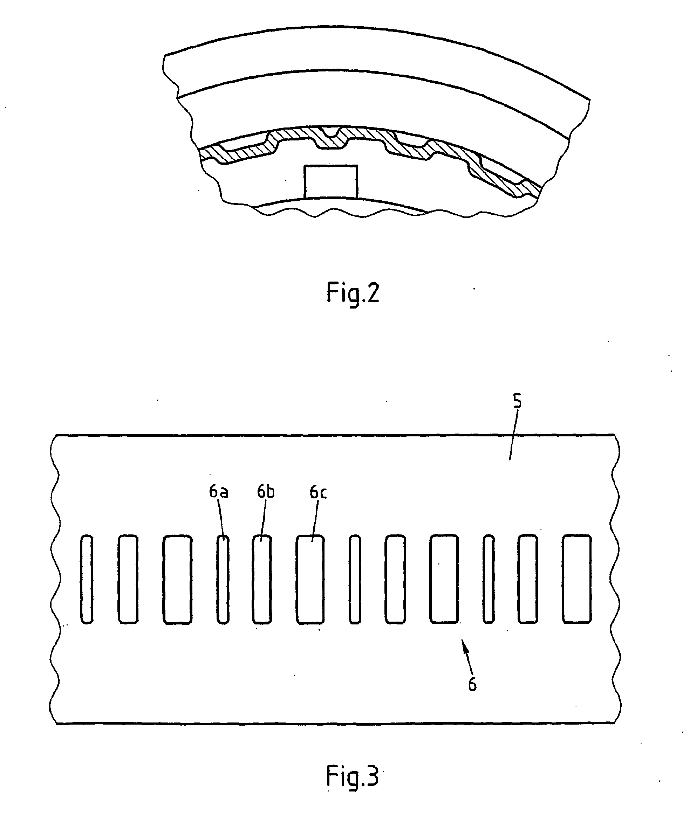

- Fig. 2: die Felge im Teilschnitt nach Linie II-II der Fig. 1 und
- Fig. 3: ein Halbzeug in Form eines profilierten Blechstreifens aus Stahl für die Herstellung einer Felge eines Fahrzeugrades nach Fig. 1.

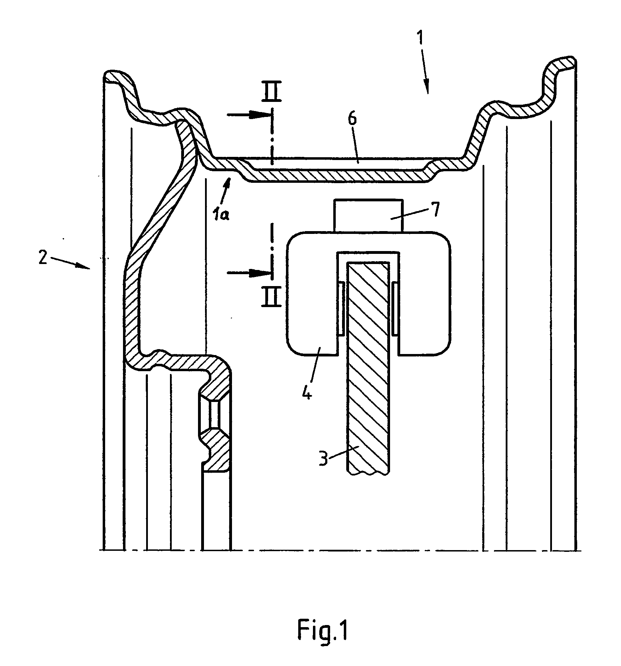

Die in Fig. 1 dargestellte aus Stahlblech gefertigte Felge 1 eines nicht vollständig dargestellten Fahrzeugrades ist z.B. durch Schweißung mit einer Radschüssel 2 verbunden. Die Radfelge 1 weist ein Felgenbett 1a auf. Im Bauraum der Radschüssel 2 und unter dem Felgenbett 1a sind eine mit dem Fahrzeugrad mitlaufende Bremsscheibe 3 und ein gegenüber dem Fahrzeugrad stationär angeordneter Bremssattel 4 vorgesehen.

Die Felge 1 ist aus einem flachen Blechstreifen 5 aus Stahl hergestellt, in dem mittig als Markierung 6 eine Spur von Marken 6a, 6b, 6c angeordnet ist, die als versteifende Sicken im Blechstreifen eingeprägt sind. Die Marken 6a, 6b, 6c bilden sich wiederholende Dreiergruppen aus verschieden breiten Sicken, deren Mittenabstand gleich ist. Ein solcher Blechstreifen 5 kann im Durchlauf gefertigt werden. Davon abgelängte Abschnitte können dann zur Felge 1 umgeformt werden.

Im eingebauten Zustand des Fahrzeugrades liegt die Markierung 6 mit ihren Dreiergruppen von Marken 6a, 6b, 6c einem vom Bremssattel 4 getragenen Sensor 7 gegenüber. Die Marken 6a, 6b, 6c und der Sensor 7 bilden eine Signalgebereinheit, die für die vom Sensor 7 erfaßten, unterschiedlich breiten Marken 6a, 6b, 6c eine Impulsfolge an ein nicht dargestelltes Meßgerät zur Erfassung der Drehgeschwindigkeit liefert. Die Drehgeschwindigkeit ermittelt das Meßgerät über den Drehwinkel bzw. die Zahl der Impulse pro Zeiteinheit. Mit dem Meßgerät kann zum einen die Drehgeschwindigkeit und zum anderen die Drehrichtung des Fahrzeugrades erfaßt werden. Für die Erfassung der Drehrichtung ist wichtig, daß die aufeinander folgenden Impulse sich voneinander unterscheiden. Dies läßt sich z.B. dadurch verwirklichen, daß die hintereinander liegenden Marken selbst verschieden sind, bei Rillen oder Sicken verschieden breit, oder daß die Abstände aufeinander folgender Marken unterschiedlich sind.

Die Marken 6a, 6b, 6c können unterschiedliche geometrische Formen haben und verschieden ausgestaltet sein. Die versteifenden Rillen oder Sicken können auch Farbmarkierungen oder reflektierende Elemente tragen. Auch ist es insbesondere bei aus Stahl bestehenden Felgenbetten möglich, sie als magnetisierte Bereiche auszubilden. Sowohl aktive als auch passive Marken sind denkbar.

## Patentansprüche

1. Ein Felgenbett (1a) aufweisende Felge (1) für ein Fahrzeugrad, bei dem auf dem Felgenbett (1a) oder in ihm integriert eine in Umfangsrichtung des Felgenbettes (1a) verlaufende Markierung (6) vorgesehen ist, die beim Passieren eines räumlich neben dem Fahrzeugrad und gegenüber dessen Drehbewegung stationär anzuordnenden Sensors (7) eines Meßgerätes zur berührungslosen Erfassung der Drehgeschwindigkeit dient, **dadurch**
**gekennzeichnet, daß** die Markierung (6) aus einer Spur von Marken (6a, 6b, 6c) besteht, die als eine das Felgenbett (1a) versteifende Profilierung ausgebildet ist.

2. Felge nach Anspruch 1,
**dadurch gekennzeichnet, daß**
die in der Spur (6) hintereinander angeordneten Marken (6a, 6b, 6c) eine laufrichtungsabhängige Signalfolge im Sensor (7) erzeugen.

3. Felge nach Anspruch 1 oder 2,
**dadurch gekennzeichnet, daß**
die Marken (6a, 6b, 6c) in gleichartige Gruppen aufgeteilt sind.

4. Felge nach einem der Ansprüche 1 bis 3,
**dadurch gekennzeichnet, daß**
daß die mit dem Sensor (7) eine Signalgebereinheit bildenden Marken (6a, 6b, 6c) optisch, magnetisch oder elektrisch erfaßbare Elemente sind.

5. Halbzeug in Form eines Blechstreifens aus Stahl zur Herstellung einer ein Felgenbett (1a) aufweisenden Felge (1) für ein Fahrzeugrad nach einem der Ansprüche 1 bis 4, bei dem die Spur (6) der Marken (6a, 6b, 6c) sich in Längsrichtung des Streifens erstreckt.

## Claims

1. Rim (1) having a rim bed (1a) for a vehicle wheel, in which a marking (6) running in the peripheral direction of the rim bed (1a) is provided on the rim bed (1a) or integrated therein, the marking being used for the contactless detection of the rotational speed when passing a sensor (7) of a measurement apparatus which is to be arranged spatially next to the vehicle wheel and in a stationary manner relative to the rotational movement thereof, **characterised in that** the marking (6) consists of a track of marks (6a, 6b, 6c), which is configured as a profiling which stiffens the rim bed (1a).

2. Rim according to claim 1, **characterised in that** the marks (6a, 6b, 6c) arranged one behind the other in the track (6) generate a signal sequence in the sensor (7) which is a function of the running direction.

3. Rim according to claim 1 or 2, **characterised in that** the marks (6a, 6b, 6c) are divided into uniform groups.

4. Rim according to any one of claims 1 to 3, **characterised in that** the marks (6a, 6b, 6c) forming a signal generator unit with the sensor (7) are optically, magnetically or electrically detectable elements.

5. Semi-finished product in the form of a sheet metal strip made of steel for producing a rim (1) having a rim bed (1a) for a vehicle wheel according to any one of claims 1 to 4, in which the track (6) of marks (6a, 6b, 6c) extends in the longitudinal direction of the strip.

## Revendications

1. Jante (1) présentant une embase de jante (1a) pour une roue de véhicule automobile, dans laquelle, sur l'embase de jante (1a) ou intégrée dans celle-ci, est prévue une marque (6) s'étendant dans le sens périphérique de l'embase de jante (1a), qui, en passant par un détecteur (7) d'un appareil de mesure, disposé spatialement à côté de la roue du véhicule automobile et stationnaire par rapport au mouvement de rotation de celle-ci, sert à la saisie sans contact de la vitesse de rotation, **caractérisé en ce que** la marque (6) consiste en une piste de marques (6a, 6b, 6c), qui est réalisée sous la forme d'un profilage qui rigidifie l'embase de jante (1a) .

2. Jante selon la revendication 1, **caractérisée en ce que** les marques (6a, 6b, 6c), disposées les unes derrière les autres sur la piste (6), génèrent, dans le détecteur, une série de signaux indépendamment de la direction de déplacement.

3. Jante selon revendication 1 ou 2, **caractérisée en ce que** les marques (6a, 6b, 6c) sont réparties en groupes similaires.

4. Jante selon l'une des revendications 1 à 3, **caractérisée en ce que** les marques (6a, 6b, 6c), formant une unité de signalisation avec le détecteur (7), sont des éléments qui peuvent être détectés de manière optique, magnétique ou électrique.

5. Demi-produit en forme de bande en tôle d'acier, pour la fabrication d'une jante (1) présentant une embase de jante (1a) pour une roue de véhicule automobile selon l'une des revendications 1 à 4, dans lequel la piste (6) des marques (6a, 6b, 6c) s'étend dans la direction longitudinale du ruban.
